# EUROPEAN PATENT SPECIFICATION

(11) **EP 1 884 758 B1**
(45) Date of publication and mention of the grant of the patent: **28.10.2009**
(21) Application number: 06291267.0
(22) Date of filing: 03.08.2006
(51) Int. Cl.: G01M 11/00, H04B 10/08

(54) **Control loop for the integrated sine wave OTDR measurement online**
Steuerkreis für Online-OTDR-Messung mit integrierter Sinuswelle
Boucle de commande de la mesure OTDR d'onde sinus intégrée en ligne

(43) Date of publication of application: 06.02.2008
(73) Proprietor: Alcatel Lucent, 75008 Paris (FR)
(72) Inventor: Hehmann, Jörg, 71263 Weil der Stadt (DE); Straub, Michael, 75433 Maulbronn (DE); Schmuck, Harald, 71701 Schwieberdingen (DE); Pfeiffer, Thomas, 70569 Stuttgart (DE)
(74) Representative: Schmidt, Werner Karl

(56) References cited:
- EP-A2- 0 313 020
- EP-A2- 0 453 816
- GB-A- 2 268 851
- GB-A- 2 294 374
- US-A1- 2002 101 640
- US-A1- 2004 070 750
- US-A1- 2004 247 316
- US-A1- 2005 196 175
- US-B1- 6 323 978
- CHAN ET AL: "FAULT SURVEILLANCE OF BRANCHED OPTICAL NETWORKS USING AN AMPLIFIER-GENARATED WAVELENGTH-SWEEPING MONITORING SOURCE" OFC/IOOC '99 OPTICAL FIBER COMMUNICATION CONFERENCE, 21 February 1999 (1999-02-21), XP000966996

## Description

### Background of the invention

The invention relates to a method of swept sine wave OTDR (optical time domain reflectometry) measurement,
wherein a data signal, which carries payload data, is modulated by a sine wave signal on top of the payload data of the data signal, thus generating a modulated optical output signal,
wherein the sine wave signal is swept within a defined frequency range.

Such a method is known from the ITG-Konferenz "Breitbandversorgung in Deutschland - wie schaffen wir Anschluss?", presentation "Kostengünstige integrierte Glasfaserüberwachung-jederzeit und überall", J. Hehmann, H. Schmuck and T. Pfeiffer, Berlin, 12./13.10.2005.

Optical fibers, such as glass fibers, are used to transport data. OTDR is a method of surveying the physical condition of an optical fiber, e.g. to find sharp bends or breaks limiting or preventing data traffic. Optical signals are sent down the optical fiber, and are reflected at a location of a disturbance. The run time of the backscattered optical signal can be analysed to find the distance of the disturbance from the input location of the optical signals.

In simple OTDR implementations, a single optical signal is sent down the optical fiber, and the backscattered signal is recorded as a function of time. The delay between input of the optical signal and the arrival of a reflection from a disturbance is measured directly. However, this implementation requires an interruption in the data traffic depending on the fiber length. A 20 km long fiber link requires an interruption time of about 400 µs per measurement.

A more advanced OTDR method, as known from the mentioned presentation at the ITG-Konferenz, modulates a sine wave signal on top of a regular data signal. The frequency of the sine wave signal is swept, typically in kHz steps up to the MHz range. The received backscattered signal undergoes a Fourier transformation, after which a time delay can be determined. The swept sine wave OTDR method requires more effort at signal processing, but can in principle be done without an interruption of the data transfer.

In order to avoid misinterpretation of OTDR measurement results, sine wave OTDR must be performed with a constant modulation amplitude of the modulated optical output signal over the whole frequency range. Unfortunately, the electronic and optical equipment for the OTDR measurement usually shows a frequency dependent behaviour. In addition, over longer time periods, the points of operation (such as the laser bias) may change, in particular due to temperature variations of the environment and aging of the equipment.

In the state of the art it is known to calibrate the amplitude of the sine wave signal (which is modulated onto the data signal) prior to an OTDR measurement, such that a constant modulation amplitude of the modulated optical output signal results. However, such a calibration test run of the equipment requires an interruption of the data traffic, and numerous regular calibration test runs are necessary to compensate for long term effects.

It is also known to perform a calibration with out of band wavelengths. Then no interruption of the data traffic is necessary, but the calibration test run has a low force of expression only; in other words the calibration is rather inaccurate.

Other prior art in this domain are:
US 2004/247316; EP-A2-0 453 816, US 2005/196175, "FAULT SURVEILLANCE OF BRANCHED OPTICAL NETWORKS USING AN AMPLIFIER-GENARATED WAVELENGTH-SWEEPING MONITORING SOURCE" CHAN ET AL, OFC/IOOC '99 OPTICAL FIBER COMMUNICATION CONFERENCE, 21 February 1999, and GB-A-2 294 374.

### Object of the invention

It is the object of the invention to introduce a method of swept sine wave OTDR which allows an accurate calibration of the OTDR measurement equipment without an interruption of the data traffic.

### Short description of the invention

This object is achieved, in accordance with the invention, by a method as introduced in the beginning, characterized in that the modulation amplitude of the modulated optical output signal is monitored, and the amplitude of the sine wave signal is controlled in dependence of the modulation amplitude of the modulated optical output signal monitored during the present frequency sweep such that the monitored modulation amplitude of the modulated optical output signal matches a predefined value distribution over the whole frequency range.

With the inventive method, the self-characteristics of the measurement equipment are compensated by a control loop. According to the invention, the amplitude of the sine wave signal is determined with the aid of a the control loop. The amplitude of the sine wave signal is altered until a desired modulation amplitude, according to the predefined value distribution, of the modulated optical output signal is registered; this is done at every frequency during a sweep. During a frequency sweep, the frequency may be changed in steps of 1 kHz, for example. As a result, an adequate amplitude of the sine wave signal is found for every frequency. The OTDR measurement then has a defined modulation amplitude of the modulated optical output signal over the whole frequency range, and no misinterpretations of the OTDR measurement results will occur. In case of a non-constant predefined value distribution, e.g. a modulation amplitude linearly increasing or decreasing with the frequency, the ODTR measurement results may easily be converted, i.e. weighted, for OTDR interpretation.

The control loop can be operated without restriction during normal data traffic. No loss of data occurs due to the control loop.

According to the invention, OTDR measurements are performed continuously during data transfer, so that disturbances in the optical fiber surveyed are found immediately. Typically a modulation depth of between 5% and 15%, preferably about 10% is used (modulation depth is the ratio between the amplitude of the sine wave signal and the total amplitude of the modulated signal). In case of a fiber break, i.e. when no data transfer is possible over the fiber, a modulation depth of 100% can be applied (i.e. no data signal is used) in order to reestablish the OTDR measurement the faster. Typically, the defined frequency range comprises an interval from 5 kHz up to 5 MHz. In other inventive applications, a defined frequency range of e.g. from 100 Hz up to 20 MHz may be useful. Note that a frequency sweep consists one complete tuning through the defined frequency range.

### Preferred variants of the invention

In a preferred variant of the inventive method, the predefined value distribution is a constant modulation amplitude over the whole frequency range. In other words, the modulation amplitude of the modulated optical output signal is kept constant over the whole frequency range. This simplifies the analysis of the OTDR measurement results. In particular, no conversions are necessary.

A particularly preferred variant of the inventive method is characterized in that the modulation amplitude of the modulated optical output signal is monitored during every frequency sweep, and that the amplitude of the sine wave signal is controlled in dependence of modulation amplitude of the modulated optical output signal monitored during the present frequency sweep. This variant represents a closed control loop. The amplitude of the sine wave signal is adapted continuously to the currently monitored modulation amplitude of the modulated optical output signal. With this variant, changes in the characteristics of the measurement equipment are immediately compensated.

An alternative, advantageous variant of the inventive method is characterized in that the amplitude of the sine wave signal is recorded as a function of frequency during a first frequency sweep, during which the amplitude of the sine wave signal is controlled in dependence of the modulation amplitude of the modulated optical output signal monitored during the present first frequency sweep, and that during a number of frequency sweeps subsequent to the first frequency sweep, the recorded amplitude is applied as the amplitude of the sine wave signal. This variant represents an open control loop. During a first frequency sweep, the control loop analyses the current modulation amplitude of the modulated optical output signal and adapts concurrently the amplitude of the sine wave signal accordingly. The amplitude of the sine wave signal is archived, e.g. in a truth table. During subsequent frequency sweeps, the amplitude of the sine wave signal is chosen according to the values of the truth table. During the subsequent frequency sweeps, monitoring of the modulation amplitude of the modulated optical output signal is unnecessary and, consequently, typically not done. A first frequency sweep is followed by a number of subsequent sweeps, followed by another first frequency sweep, followed by a number of subsequent sweeps, and so on. The most recent set of values for the amplitude of the sine wave signal is applied. The number of subsequent frequency sweeps may be constant, such as a fixed number e.g. between 10 and 1000, or it may be chosen in dependence of the difference between values of amplitudes of consecutive first frequency sweeps, with small differences resulting in large numbers of subsequent sweeps, and large differences resulting in small numbers of subsequent sweeps (or even no subsequent sweeps at all). During subsequent sweeps, some of the measurement equipment may be conserved. This variant is particularly useful if changes due to environmental changes or aging are rather slow.

Within the scope of the present invention is also an optical transmitter for a data signal with a sweep sine wave OTDR measurement unit, comprising
- a data input for a data signal,
- a sine wave generator for generating a sine wave signal that sweeps within a predefined frequency range,
- a modulation device for modulating the sine wave signal on top of the data signal, thus generating a modulated signal,
- and a laser diode for generating a modulated optical output signal out of the modulated signal,
characterized in that the optical transmitter comprises a control loop with a monitoring device for monitoring the modulation amplitude of the modulated optical output signal, wherein the control loop is designed for controlling the amplitude of the sine wave signal in dependence of the modulation amplitude of the modulated optical output signal monitored during the present frequency sweep such that the monitored modulation amplitude of the modulated optical output signal matches a predefined value distribution over the whole frequency range, in particular wherein the predefined value distribution is a constant modulation amplitude over the whole frequency range. This optical transmitter can perform the above described inventive method. The transmitter can concurrently transfer data over an optical fiber, in particular glass fiber, and survey the properties of the optical fiber by OTDR.

Preferably, the OTDR measurement unit is integrated into the optical transmitter. This may comprise
- use of the laser of the optical transmitter by the OTDR measurement unit,
- use of a monitoring diode of the laser for monitoring the modulation amplitude of the modulated optical output signal,
- the optical transmitter and the OTDR measurement unit are located on the same board. The modulation device may comprise, in accordance with the invention, a laser diode driver chip or a transistor connected downstream of a laser diode driver chip. Further, the sine wave generator and the gain control may be located on an ASIC (application specific integrated chip) or an FPGA (free programmable gate array) or a microprocessor.

A preferred embodiment of the inventive optical transmitter is characterized in that the control loop is designed to monitor the modulation amplitude of the modulated optical output signal during every frequency sweep, and that the control loop is further designed to control the amplitude of the sine wave signal in dependence of modulation amplitude monitored during the present frequency sweep. This embodiment is adapted for a closed control loop operation, allowing fast reaction to changes of the measurement equipment characteristics.

An alternative, preferred embodiment of the inventive optical transmitter provides that the control loop comprises a memory for recording the amplitude of a sine wave signal as a function of frequency during a first frequency sweep, during which the amplitude of the sine wave signal is controlled in dependence of the modulation amplitude of the modulated optical output signal monitored during the present first frequency sweep, and that the memory is connected to the sine wave generator for applying the recorded amplitude as the amplitude of the sine wave signals during a number of frequency sweeps subsequent to the first frequency sweep. This embodiment is adapted for an open loop operation, allowing to conserve equipment resources.

In a further, advantageous embodiment, the monitoring device comprises a monitor diode directly attached to the laser diode, or an OTDR photo diode of the OTDR measurement unit. The monitor diode can be co-used for regular surveying of the laser diode, and the OTDR diode can be co-used for analysing backscattered light, so the equipment is used very efficiently. Note that when using the OTDR diode as a monitoring device, measures must be taken so that some light of the laser diode gets into the OTDR diode directly, i.e. without backscattering in the optical fiber. This can be done by altering a beam splitter belonging to the OTDR diode, for example.

A preferred, further embodiment of the inventive optical transmitter provides that the control loop is of analogue type, that an amplifier is connected downstream to the sine wave generator, and that the amplifier is connected to a control circuit which is connected to the monitoring device. This embodiment is simple in design and allows a direct, active control.

Alternatively, an advantageous embodiment is characterized in that the control loop is of digital type, that a gain control unit of the sine wave generator is connected to the monitoring device via an ADC (analogue to digital conversion) unit, and that a DAC (digital to analogue conversion) unit is connected downstream of the sine wave generator. This embodiment facilitates a recording of amplitude values for an open control loop operation mode.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a block diagram of an inventive embodiment of an optical transmitter with an embedded OTDR measurement unit, with an analogue control loop using a monitor diode as monitoring device;
- Fig. 2: shows a block diagram of another inventive embodiment, with a digital control loop using a monitor diode as monitoring device;
- Fig. 3: shown a block diagram of another inventive embodiment, with a digital control loop using an OTDR photo diode as a monitoring device;
- Fig. 4: shows a block diagram of another inventive embodiment, with a digital control loop using a monitor diode as monitoring device, with a modulation transistor and a memory for amplitude values of the sine wave signal.

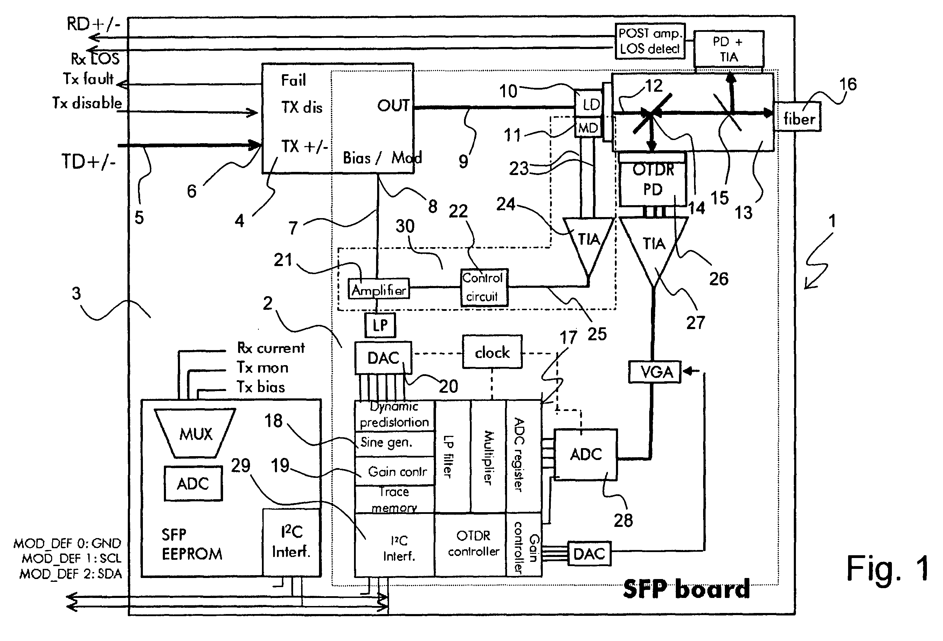

**Fig. 1** shows an inventive embodiment of an optical transmitter 1 with an integrated OTDR measurement unit 2, all arranged on a common SFP board 3. In the following, some functions of particular relevance for the invention are explained. An expert in the field, however, will extract many more details from the figure (and subsequent figures), which all contribute to the invention.

The optical transmitter 1 comprises a laser diode (LD) driver chip 4, which receives a data signal 5 at a data input 6. The LD driver chip 4 also receives a sine wave signal 7 at a modulation input 8. The LD driver chip 4 modulates the sine wave signal 7 on top of the data signal 5, and thus generates a modulated signal 9.

The optical transmitter 1 further comprises a laser diode 10, with a directly attached monitor diode 11. The monitor diode 11 is typically located at a semitransparent mirror of the laser resonator of the laser diode 10. The laser diode 10 transforms the electrical modulated signal 9 into a modulated optical output signal 12, which is fed into an optical module 13. However, part of the modulated optical output signal 12 is received and monitored by the monitor diode 11 before entering the optical module 13. The optical module 13 guides the modulated optical output signal 12 through two beam splitters 14, 15 and into an optical fiber 16. The optical fiber 16 transports the modulated optical output signal 12 to a distant receiver, where the information of the data signal 5 is needed.

Integrated into the optical transmitter 1 is the OTDR measurement unit 2. The OTDR measurement unit 2 comprises a digital processing unit 17 (e.g. an ASIC) with a sine wave generator 18, generating a digital sine wave signal. The frequency of the digital sine wave signal is swept over a predefined frequency range, and a new sweep is begun every time after one sweep has been completed. The digital sine wave signal has a constant amplitude in this embodiment, as determined by a gain control unit 19. The digital sine wave signal is converted into an analogue sine wave signal by a DAC unit 20, and the analogue sine wave signal is fed into an amplifier 21. The amplitude of the analogue sine wave signal is amplified according to the demands of a control circuit 22. The amplified analogue sine wave signal represents the sine wave signal 7 fed into the LD driver chip 4.

The monitor diode 11 provides a monitor signal 23 to a trans impedance amplifier (TIA) 24, and the amplified monitor signal 25 is provided to the control circuit 22. Within the control circuit 22, the modulation amplitude of the modulated optical output signal 12 is determined and compared to a predefined (and here fixed) target value. If the modulation amplitude is too low, the control circuit 22 demands a higher amplification factor at amplifier 21, and if the modulation amplitude is too high, the control circuit 22 demands a lower amplification factor. The control circuit 22 may be realized as a PID controller.

The amplifier 21, the monitor diode 11, the TIA 24, and the control circuit 22 represent an analogue control loop 30 for the amplitude of the sine wave signal 7. The control loop 30 is permanently operating in this embodiment, actively controlling the amplitude of the sine wave signal 7 during every frequency sweep.

The modulated optical output signal 12 is partly backscattered in the optical fiber 16. This backscattered light is partially deflected by beam splitter 14 into an OTDR photo diode 26. The OTDR photo diode 26 is separate from the monitor diode 11. The detection signal of the OTDR photo diode 26 is amplified by TIA 27 and fed into the digital processing unit 17 via an ADC unit 28. Information about the detection signal, and thus the OTDR characteristics of the optical fiber 16, is provided by an I²C data interface 29 of the digital processing unit 17.

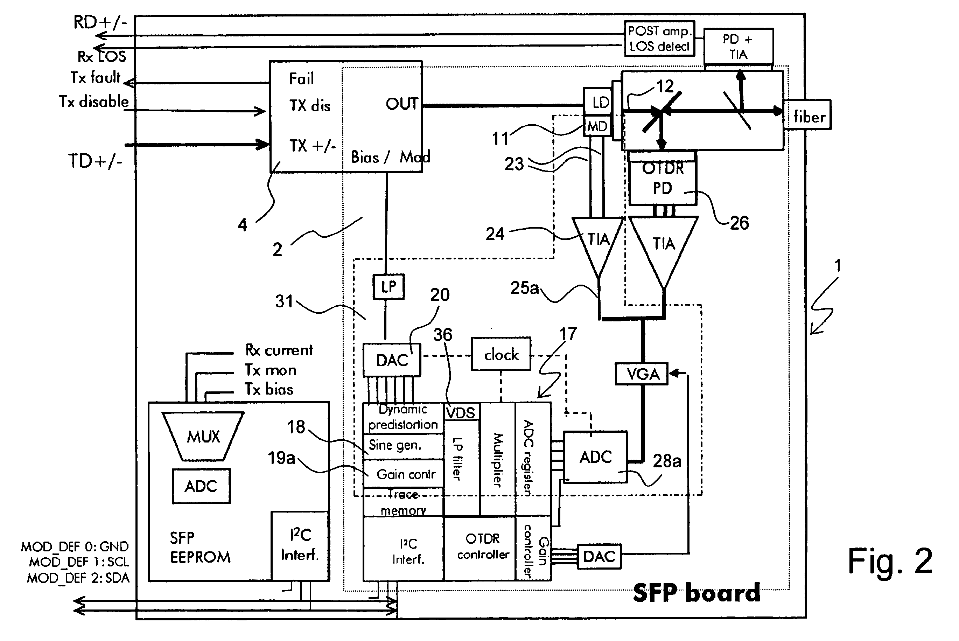

**Fig. 2** shows a similar embodiment of an optical transmitter 1 with an integrated OTDR measurement unit 2, but with a digital control loop 31. Only the differences to the embodiment of Fig. 1 are described.

The monitor diode 11 provides its monitor signal 23 to TIA 24 again, and the amplified monitor signal 25a is fed via ADC unit 28a into digital processing unit 17, e.g. an ASIC. Within the digital processing unit 17, the modulation amplitude of the modulated optical output signal 12 is determined and compared to a predefined target value corresponding to the current frequency of the sine wave generator 18. The set of predefined target values for every frequency within the predefined frequency range forms a predefined value distribution that is stored in and made available by a value distribution storage (VDS) 36 of the processing unit 17. Note that the value distribution storage VDS 36 only stores one value - and therefore may be obsolete - when the predefined value distribution is a constant modulation amplitude over the whole frequency range. If the modulation amplitude is lower than the target value, then the amplitude of the digital sine wave signal generated at sine wave generator 18 is increased by the gain control unit 19a. If the modulation amplitude is higher than the target value, the amplitude of the digital sine wave signal is lowered by gain control 19a. The digital sine wave signal is fed into DAC unit 20. The converted analogue sine wave signal represents the sine wave signal 7 fed into the LD driver chip 4.

Note that ADC unit 28a is also used for converting the amplified detection signal of the OTDR photo diode 26.

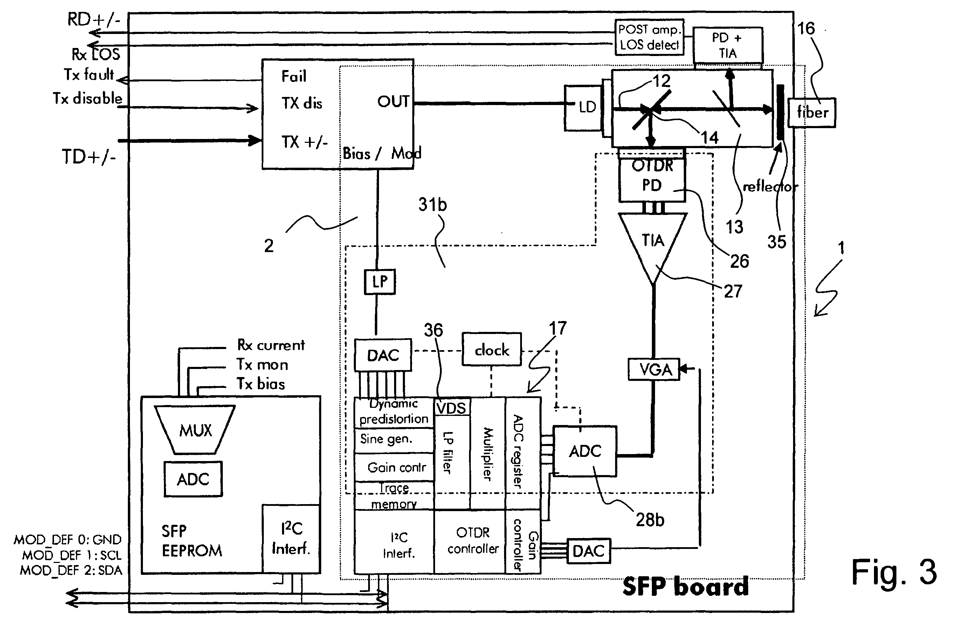

Fig. 3 shows a further embodiment of an optical transmitter 1 with an integrated OTDR measurement unit 2 similar to Fig. 2, but with a different monitoring device in a digital control loop 31b. Only the differences to Fig. 2 are described.

As a monitoring device for the modulated optical output signal 12, the OTDR photo diode 26 is used. A semitransparent reflector 35, located before the end of the optical fiber 16, reflects a small part of the modulated optical output signal 12 leaving the optical module 13 back into the optical module 13, so that the beam splitter 14 deflects some of the modulated optical output signal 12 onto the OTDR photo diode 26. The detection signal of the OTDR photo diode 26, which carries information about the modulation amplitude of the modulated optical output signal 12, is amplified in TIA 27 and fed into the digital processing unit 17 via ADC unit 28a.

Within the digital processing unit 17, the modulation amplitude of the modulated optical output signal 12 is determined and used as known form the embodiment of Fig. 2.

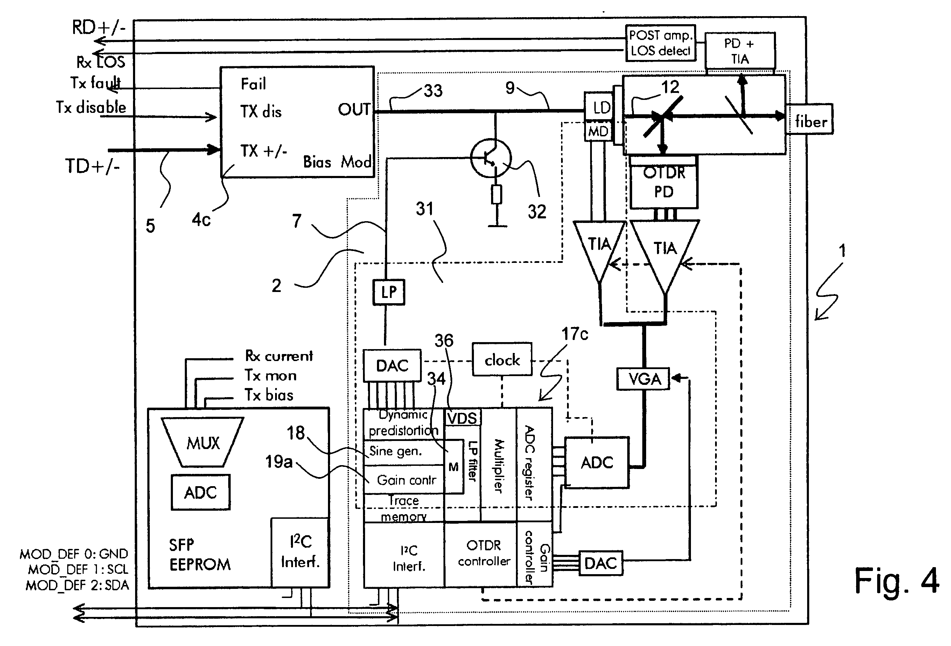

**Fig. 4** shows a further embodiment of an optical transmitter 1 with an integrated OTDR measurement unit 2 similar to Fig. 2, but with a different modulation device and a memory 34. Only the differences to Fig. 2 are described.

The modulation of the data signal 5 and the sine wave signal 7 is done by a modulation transistor 32, which adds the sine wave signal 7 to an output signal 33 of the LD driver chip 4c, thus generating the modulated signal 9. The LD driver chip 4c basically forwards the data signal 5, thus generating the output signal 33.

Note that the modulation transistor 32 basically does not affect the functioning of the digital control loop 31.

In the embodiment of Fig. 4, the digital processing unit 17 comprises a memory 34 for storing the amplitude values used by the gain control unit 19a for the digital sine wave signal during a first frequency sweep, during which the modulated optical output signal has been monitored and the amplitude of the sine wave signal has concurrently been adjusted according to the monitoring results. For every frequency during the first frequency sweep, an amplitude value has been stored. The memory 34 is connected to the sine wave generator 18 via the gain control unit 19a on the digital processing unit 17, and the stored amplitude values can be applied by the sine wave generator 18 during a number of frequency sweeps subsequent to the first frequency sweep. During the subsequent frequency sweeps, the monitoring of the modulated optical output signal 12 and its analysis in the digital processing unit 17 is suspended, saving system resources. After a few subsequent frequency sweeps, another first frequency sweep is performed, and the stored amplitude values are updated.

## Claims

1. Method of swept sine wave OTDR (optical time domain reflectometry) measurement,
wherein a data signal (5), which carries payload data, is modulated by a sine wave signal (7) on top of the payload data of the data signal (5), thus generating a modulated optical output signal (12),
wherein the sine wave signal (7) is swept within a defined frequency range,
**characterized in that**
the modulation amplitude of the modulated optical output signal (12) is monitored,
and the amplitude of the sine wave signal (7) is controlled in dependence of the modulation amplitude of the modulated optical output signal (12) monitored during the present frequency sweep such that the monitored modulation amplitude of the modulated optical output signal (12) matches a predefined value distribution over the whole frequency range.

2. Method according to claim 1, **characterized in that** the predefined value distribution is a constant modulation amplitude over the whole frequency range.

3. Method according to claim 1, **characterized in**
**that** the modulation amplitude of the modulated optical output signal (12) is monitored during every frequency sweep,
and **that** the amplitude of the sine wave signal (7) is controlled in dependence of modulation amplitude of the modulated optical output signal (12) monitored during the present frequency sweep.

4. Method according to claim 1, **characterized in**
**that** the amplitude of the sine wave signal (7) is recorded as a function of frequency during a first frequency sweep, during which the amplitude of the sine wave signal (7) is controlled in dependence of the modulation amplitude of the modulated optical output signal (12) monitored during the present first frequency sweep,
and **that** during a number of frequency sweeps subsequent to the first frequency sweep, the recorded amplitude is applied as the amplitude of the sine wave signal (7).

5. Optical transmitter (1) for a data signal (5) with a sweep sine wave OTDR measurement unit (2), comprising
- a data input (6) for a data signal (5),
- a sine wave generator (18) for generating a sine wave signal (7) that sweeps within a predefined frequency range,
- a modulation device for modulating the sine wave signal (7) on top of the data signal (5), thus generating a modulated signal (9),
- and a laser diode (10) for generating a modulated optical output signal (12) out of the modulated signal (9),
**characterized in that**
the optical transmitter (1) comprises a control loop (30; 31; 31 b) with a monitoring device for monitoring the modulation amplitude of the modulated optical output signal (12),
wherein the control loop (30; 31; 31 b) is designed for controlling the amplitude of the sine wave signal (7) in dependence of the modulation amplitude of the modulated optical output signal (12) monitored during the present frequency sweep such that the monitored modulation amplitude of the modulated optical output signal (12) matches a predefined value distribution over the whole frequency range, in particular wherein the predefined value distribution is a constant modulation amplitude over the whole frequency range.

6. Optical transmitter (1) according to claim 5, **characterized in**
**that** the control loop (30; 31; 31b) is designed to monitor the modulation amplitude of the modulated optical output signal (12) during every frequency sweep,
and **that** the control loop (30; 31; 31 b) is further designed to control the amplitude of the sine wave signal (7) in dependence of modulation amplitude monitored during the present frequency sweep.

7. Optical transmitter (1) according to claim 5, **characterized in that**
the control loop (30; 31; 31b) comprises a memory (34) for recording the amplitude of a sine wave signal (7) as a function of frequency during a first frequency sweep, during which the amplitude of the sine wave signal (7) is controlled in dependence of the modulation amplitude of the modulated optical output signal (12) monitored during the present first frequency sweep,
and that the memory (5) is connected to the sine wave generator (18) for applying the recorded amplitude as the amplitude of the sine wave signals (7) during a number of frequency sweeps subsequent to the first frequency sweep.

8. Optical transmitter (1) according to claim 5, **characterized in that** the monitoring device comprises a monitor diode (11) directly attached to the laser diode (10), or an OTDR photo diode (26) of the OTDR measurement unit (2).

9. Optical transmitter (1) according to claim 5, **characterized in**
**that** the control loop (30) is of analogue type,
**that** an amplifier (21) is connected downstream to the sine wave generator (18), and that the amplifier (21) is connected to a control circuit (22) which is connected to the monitoring device.

10. Optical transmitter (1) according to claim 5, **characterized in**
**that** the control loop (31; 31b) is of digital type,
**that** a gain control unit (19a) of the sine wave generator (18) is connected to the monitoring device via an ADC (analogue to digital conversion) unit (28a; 28b),
and **that** a DAC (digital to analogue conversion) unit (20) is connected downstream of the sine wave generator (18).

## Patentansprüche

1. Verfahren für die OTDR-Messung (optische Zeitbereichs-Reflektometrie) einer gewobbelten Sinuswelle,
wobei ein Datensignal (5), welches Nutzdaten transportiert, von einem Sinuswellensignal (7) auf die Nutzdaten des Datensignals (5) aufmoduliert wird, wodurch ein moduliertes optisches Ausgangssignal (12) erzeugt wird,
wobei das Sinuswellensignal (7) innerhalb eines definierten Frequenzbereichs gewobbelt wird,
**dadurch gekennzeichnet, dass**
die Modulationsamplitude des modulierten optischen Ausgangssignals (12) überwacht wird,
und die Amplitude des Sinuswellensignals (7) in Abhängigkeit von der während des aktuellen Frequenzdurchlaufs überwachten Modulationsamplitude des modulierten optischen Ausgangssignals (12) gesteuert wird, so dass die überwachte Modulationsamplitude des modulierten optischen Ausgangssignals (12) über den gesamten Frequenzbereich hinweg einer vorbestimmten Werteverteilung entspricht.

2. Verfahren nach Anspruch 1, **dadurch gekennzeichnet, dass** die vorbestimmte Werteverteilung eine über den gesamten Frequenzbereich hinweg konstante Modulationsamplitude ist.

3. Verfahren nach Anspruch 1, **dadurch gekennzeichnet,**
**dass** die Modulationsamplitude des modulierten optischen Ausgangssignals (12) während eines jeden Frequenzdurchlaufs überwacht wird,
und **dass** die Amplitude des Sinuswellensignals (7) in Abhängigkeit von der während des aktuellen Frequenzdurchlaufs überwachten Modulationsamplitude des modulierten optischen Ausgangssignals (12) gesteuert wird.

4. Verfahren nach Anspruch 1, **dadurch gekennzeichnet,**
**dass** die Amplitude des Sinuswellensignals (7) als eine Funktion der Frequenz während eines ersten Frequenzdurchlaufs, während welchem die Amplitude des Sinuswellensignals (7) in Abhängigkeit von der während des aktuellen ersten Frequenzdurchlaufs überwachten Modulationsamplitude des modulierten optischen Ausgangssignals (12) gesteuert wird, aufgezeichnet wird, und dass die aufgezeichnete Amplitude während mehreren dem ersten Frequenzdurchlauf folgenden Frequenzdurchläufen als die Amplitude des Sinuswellensignals (7) angewendet wird.

5. Optischer Sender (1) für ein Datensignal (5) mit einer OTDR-Messvorrichtung (2) mit gewobbelten Sinuswellen, umfassend
- einen Dateneingang (6) für ein Datensignal (5),
- einen Sinuswellengenerator (18) zum Erzeugen eines Sinuswellensignals (7), welches einen vorbestimmten Frequenzbereich durchläuft,
- eine Modulationsvorrichtung zum Aufmodulieren des Sinuswellensignals (7) auf das Datensignal (5), wodurch ein moduliertes Signal (9) erzeugt wird,
- und eine Laserdiode (10) zum Erzeugen eines modulierten optischen Ausgangssignals (12) aus dem modulierten Signal (9),
**dadurch gekennzeichnet, dass**
der optische Sender (1) einen Steuerkreis (30; 31; 31b) mit einer Überwachungsvorrichtung zum Überwachen der Modulationsamplitude des modulierten optischen Ausgangssignals (12) umfasst,
wobei der Steuerkreis (30; 31; 31b) dazu ausgelegt ist, die Amplitude des Sinuswellensignals (7) in Abhängigkeit von der während des aktuellen Frequenzdurchlaufs überwachten Modulationsamplitude des modulierten optischen Ausgangssignals (12) so zu steuern, dass die überwachte Modulationsamplitude des modulierten optischen Ausgangssignals (12) einer vorbestimmten Werteverteilung über den gesamten Frequenzbereich hinweg entspricht, insbesondere wobei die vorbestimmte Werteverteilung über den gesamten Frequenzbereich hinweg eine konstante Modulationsamplitude ist.

6. Optischer Sender (1) nach Anspruch 5, **dadurch gekennzeichnet,**
**dass** der Steuerkreis (30; 31; 31b) dazu ausgelegt ist, die Modulationsamplitude des modulierten optischen Ausgangssignals (12) während eines jeden Frequenzdurchlaufs zu überwachen,
und **dass** der Steuerkreis (30; 31; 31b) weiterhin dazu ausgelegt ist, die Amplitude des Sinuswellensignals (7) in Abhängigkeit von der während des aktuellen Frequenzdurchlaufs überwachten Modulationsamplitude zu steuern.

7. Optischer Sender (1) nach Anspruch 5, **dadurch gekennzeichnet, dass** der Steuerkreis (30; 31; 31b) einen Speicher (34) zum Aufzeichnen der Amplitude eines Sinuswellensignals (7) als eine Funktion der Frequenz während eines ersten Frequenzdurchlaufs, während welchem die Amplitude des Sinuswellensignals (7) in Abhängigkeit von der während des aktuellen ersten Frequenzdurchlaufs überwachten Modulationsamplitude des modulierten optischen Ausgangssignals (12) gesteuert wird, umfasst.
und dass der Speicher (5) an den Sinuswellengenerator (18) angeschlossen ist, um die aufgezeichnete Amplitude als die Amplitude der Sinuswellensignale (7) für mehrere auf den ersten Frequenzdurchlauf folgende Frequenzdurchläufe anzuwenden.

8. Optischer Sender (1) nach Anspruch 5, **dadurch gekennzeichnet, dass** die Überwachungsvorrichtung eine direkt mit der Laserdiode (10) verbundene Monitordiode (11) umfasst, oder eine OTDR-Fotodiode (26) des OTDR-Messgeräts (2).

9. Optischer Sender (1) nach Anspruch 5, **dadurch gekennzeichnet, dass** der Steuerkreis (30) von analogem Typ ist,
dass ein Verstärker (21) dem Sinuswellengenerator (18) nachgeschaltet ist, und dass der Verstärker (21) an eine Steuerschaltung (22), welche mit der Überwachungsvorrichtung verbunden ist, angeschlossen ist.

10. Optischer Sender (1) nach Anspruch 5, **dadurch gekennzeichnet, dass** der Steuerkreis (31; 31b) vom digitalen Typ ist,
dass eine Verstärkungssteuervorrichtung (19a) des Sinuswellengenerators (18) über eine ADC-Einheit (Analog-Digital-Wandlung) (28a; 28b) an die Überwachungsvorrichtung angeschlossen ist,
und dass eine DAC-Einheit (Digital-Analog-Wandlung) (20) dem Sinuswellengenerator (18) nachgeschaltet ist

## Revendications

1. Procédé de mesure par OTDR (méthode de rétrodiffusion) d'onde sinusoïdale balayée,
dans lequel un signal de données (5) qui transporte des données utiles est modulé par un signal sinusoïdal (7) au-dessus des données utiles du signal de données (5), générant ainsi un signal de sortie optique modulé (12),
dans lequel le signal sinusoïdal (7) est balayé dans une plage de fréquences définie,
**caractérisé en ce que**
l'amplitude de modulation du signal de sortie optique modulé (12) est surveillée,
et l'amplitude du signal sinusoïdal (7) est contrôlée en fonction de l'amplitude de modulation du signal de sortie optique modulé (12) surveillée au cours du balayage de fréquence courant de telle sorte que l'amplitude de modulation surveillée du signal de sortie optique modulé (12)
corresponde à une répartition de valeurs prédéfinie sur toute la plage de fréquences.

2. Procédé selon la revendication 1, **caractérisé en ce que** la répartition de valeurs prédéfinie est une amplitude de modulation constante sur toute la plage de fréquences.

3. Procédé selon la revendication 1, **caractérisé en ce que**
l'amplitude de modulation du signal de sortie optique modulé (12) est surveillée au cours de chaque balayage de fréquence,
et **en ce que** l'amplitude du signal sinusoïdal (7) est contrôlée en fonction de l'amplitude de modulation du signal de sortie optique
modulé (12) surveillée au cours du balayage de fréquence courant.

4. Procédé selon la revendication 1, **caractérisé en ce que**
l'amplitude du signal sinusoïdal (7) est enregistrée en fonction de la fréquence au cours d'un premier balayage de fréquence, pendant lequel l'amplitude du signal sinusoïdal (7) est contrôlée en fonction de l'amplitude de modulation du signal de sortie optique modulé (12) surveillée au cours du premier balayage de fréquence courant,
et pendant un certain nombre de balayages de fréquence suivant le premier balayage de fréquence, l'amplitude enregistrée est appliquée comme amplitude du signal sinusoïdal (7).

5. Émetteur optique (1) pour un signal de données (5) comprenant une unité de mesure par OTDR (méthode de rétrodiffusion) d'onde sinusoïdale balayée (2), comprenant
- une entrée de données (6) pour un signal de données (5),
- un générateur d'onde sinusoïdale (18) pour générer un signal sinusoïdal (7) qui est balayé dans une plage de fréquences prédéfinie,
- un dispositif de modulation pour moduler le signal sinusoïdal (7) au-dessus du signal de données (5), générant ainsi un signal modulé (9),
- et une diode laser (10) pour générer un signal de sortie optique modulé (12) à partir du signal modulé (9),
**caractérisé en ce que**
l'émetteur optique (1) comprend une boucle de commande (30; 31 ; 31b) avec dispositif de surveillance pour surveiller l'amplitude de modulation du signal de sortie optique modulé (12),
dans lequel la boucle de commande (30; 31 ; 31b) est conçue pour contrôler l'amplitude du signal sinusoïdal (7) en fonction de l'amplitude de modulation du signal de sortie optique modulé (12) surveillée au cours du balayage de fréquence courant de telle sorte que l'amplitude de modulation surveillée du signal de sortie optique modulé (12) corresponde à une répartition de valeurs prédéfinie sur toute la plage de fréquences, en particulier dans lequel la répartition de valeurs prédéfinie est une amplitude de modulation constante sur toute la plage de fréquences.

6. Émetteur optique (1) selon la revendication 5, **caractérisé en ce que**
la boucle de commande (30 ; 31 ; 31b) est conçue pour surveiller l'amplitude de modulation du signal de sortie optique modulé (12) au cours de chaque balayage de fréquence,
et la boucle de commande (30; 31 ; 31b) est conçue en outre pour contrôler l'amplitude du signal sinusoïdal (7) en fonction de l'amplitude de modulation surveillée au cours du balayage de fréquence courant.

7. Émetteur optique (1) selon la revendication 5, **caractérisé en ce que** la boucle de commande (30 ; 31 ; 31b) comprend une mémoire (34) pour enregistrer l'amplitude d'un signal sinusoïdal (7) en fonction de la fréquence au cours d'un premier balayage de fréquence, pendant lequel l'amplitude du signal sinusoïdal (7) est contrôlée en fonction de l'amplitude de modulation du signal de sortie optique modulé (12) surveillée pendant le premier balayage de fréquence courant,
et **en ce que** la mémoire (5) est connectée au générateur d'onde sinusoïdale (18) pour appliquer l'amplitude enregistrée comme amplitude des signaux sinusoïdaux (7) pendant un certain nombre de balayages de fréquence suivant le premier balayage de fréquence.

8. Émetteur optique (1) selon la revendication 5, **caractérisé en ce que** le dispositif de surveillance comprend une diode de surveillance (11) fixée directement sur la diode laser (10) ou une photodiode OTDR (26) de l'unité de mesure OTDR (2).

9. Émetteur optique (1) selon la revendication 5, **caractérisé en ce que** la boucle de commande (30) est du type analogique,
un amplificateur (21) est connecté en aval au générateur d'onde sinusoïdal (18) et l'amplificateur (21) est connecté à un circuit de commande (22) qui est connecté au dispositif de surveillance.

10. Émetteur optique (1) selon la revendication 5, **caractérisé en ce que** la boucle de commande (31 ; 31 b) est du type numérique,
une unité de réglage de puissance (19a) du générateur d'onde sinusoïdale (18) est connectée au dispositif de surveillance via une unité ADC (conversion analogique-numérique) (28a ; 28b),
et une unité DAC (conversion numérique-analogique) (20) est connectée en aval du générateur d'onde sinusoïdale (18).
